# FASCICULE DE BREVET EUROPEEN

(11) **EP 1 355 856 B1**
(45) Date de publication et mention de la délivrance du brevet: **05.08.2015**
(21) Numéro de dépôt: 01989663.8
(22) Date de dépôt: 26.12.2001
(51) Int. Cl.: C01B 33/193

(54) **PROCEDE DE PREPARATION DE SILICE PRECIPITEE CONTENANT DE L'ALUMINIUM**
VERFAHREN ZUR HERSTELLUNG VON ALUMINIUM-ENTHALTENDEN FÄLLUNGSKIESELSÄUREN
METHOD FOR PREPARING PRECIPITATED SILICA CONTAINING ALUMINIUM

(30) Priorité: 28.12.2000 FR 0017236
(43) Date de publication de la demande: 29.10.2003
(73) Titulaire: RHODIA CHIMIE, 75009 Paris (FR)
(72) Inventeur: VALERO, Rémi, F-69005 Lyon (FR); CHEVALLIER, Yvonick, F-69270 Fontaines Saint-Martin (FR)
(74) Mandataire: Ferri, Isabella
(86) Numéro de dépôt international: PCT/FR2001/004205
(87) Numéro de publication internationale: WO 2002/053497

(56) Documents cités:
- US-A- 4 067 746
- US-A- 5 876 494
- US-A- 5 958 127

## Description

La présente invention concerne un nouveau procédé de préparation de silice précipitée, plus particulièrement de silices précipitées se présentant sous forme de poudre, de billes sensiblement sphériques ou de granulés, et l'application des silices ainsi obtenues comme charge renforçante pour les élastomètres.

On sait que la silice précipitée est utilisée depuis longtemps comme charge blanche renforçante dans les élastomères.

Cependant, comme toute charge renforçante, il convient qu'elle puisse se manipuler d'une part, et surtout s'incorporer d'autre part facilement dans les mélanges.

On sait d'une manière générale que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère (incorporabilité de la charge) et à se désagréger ou se désagglomérer sous la forme d'une poudre très fine (désagrégation de la charge), et où, d'autre part, la poudre issue du processus de désagrégation précité peut elle-même, à son tour, se disperser parfaitement et de façon homogène dans l'élastomère (dispersion de la poudre).

De plus, pour des raisons d'affinités réciproques, les particules de silice ont une fâcheuse tendance dans la matrice élastomère, à s'agglomérer entre elles. Ces interactions ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues (ce nombre théorique d'interactions silice/élastomère étant, comme cela est bien connu, directement proportionnel à la surface externe, de la silice utilisée). Pour augmenter les interactions silice/élastomères, il est possible d'incorporer des agents dits de couplage favorisant ces interactions. Ainsi, dans ce cas, il est avantageux de préparer de la silice précipitée qui présente une bonne réactivité avec ces agents de couplage.

En outre, les interactions silice/silice tendent à l'état cru à augmenter la raideur et la consistance des mélanges rendant ainsi leur mise en oeuvre plus difficile.

Le problème se pose de disposer de charges qui, tout en pouvant avoir une taille relativement élevée, présentent une très bonne aptitude à la dispersion dans les élastomères.

Des procédés résolvant ces problèmes ont été proposés par la Demanderesse. Ainsi, il a été décrit dans les brevets EP 0762992 et EP 0762993 des procédés particuliers de préparation de silice précipitée au cours duquel notamment un composé (I) de l'aluminium est ajouté au milieu réactionnel, après l'étape de l'ajout simultané de l'agent acidifiant et du silicate de métal alcalin ; après cet ajout de composé de l'aluminium, une filtration et un délitage sont réalisés, le délitage étant effectué en présence d'au moins un composé (II) de l'aluminium. Il est préféré, lors de l'ajout du composé (I) de l'aluminium, d'ajuster le pH dans le temps en commençant par une descente de pH, suivi d'une remontée à l'aide d'un agent basique, généralement la soude, et enfin une descente de pH.

Ces procédés produisent de la silice précipitée de propriétés satisfaisantes, mais ils ne sont pas toujours aisés à mettre en oeuvre. Parmi ces propriétés, la silice obtenue présente une excellente réactivité vis-à-vis des agents de couplage, tels que notamment le bis[3-triethyoxysilylpropyl)tetrasulfane].

La présente invention a pour but d'obvier aux inconvénients mentionnés ci-dessus et de proposer une alternative aux procédés antérieurs.

Plus précisément, elle a notamment pour but de proposer un nouveau procédé de préparation simple et permettant en particulier une productivité élevée de silice précipitée tout en procurant des propriétés très satisfaisantes pour la silice obtenue.

Elle a donc aussi pour but de proposer un nouveau procédé simple de préparation de silice précipitée ayant, de manière avantageuse, une très bonne aptitude à la dispersion (et à la désagglomération) et des propriétés renforçantes très satisfaisantes, en particulier qui, utilisées à titre de charge renforçante pour élastomères, confère à ces derniers d'excellentes propriétés rhéologiques tout en leur procurant de bonnes propriétés mécaniques.

La présente invention est aussi relative à l'utilisation desdites silices précipitées comme charges renforçantes pour élastomères.

Dans l'exposé qui suit, la surface spécifique BET est déterminée selon la méthode BRUNAUER-EMMET-TELLER décrite dans "The journal of the American Chemical Society", vol.60, page 309, février 1938 et correspondant à la norme NFT 45007 (novembre 1987).

La surface spécifique CTAB est la surface externe déterminée selon la norme NFT 45007 (novembre 1987) (5.12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

Le pH est mesuré selon la norme ISO 787/9 (pH d'une suspension à 5 % dans l'eau).

On précise enfin que les volumes poreux donnés sont mesurés par porosimétrie au mercure, les diamètres de pores étant calculés par la relation de WASHBURN avec un angle de contact théta égal à 130°C et une tension superficielle gamma égale à 484 Dynes/cm (porosimètre MICROMERITICS 9300).

L'aptitude à la dispersion et à la désagglomération des silices selon l'invention peut être quantifiée au moyen d'un test spécifique de désagglomération.

Le test de désagglomération est réalisé selon le protocole suivant :
la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultrasons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian Ø₅₀ que l'on obtient est d'autant plus faible que la silice présente une aptitude à la désagglomération élevée. On détermine également le rapport (10 x volume de suspension introduite (en ml)) densité optique de la suspension détectée par le granulomètre (cette densité optique est de l'ordre de 20). Ce rapport est indicatif du taux de fines, c'est-à-dire du taux de particules inférieures à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

L'un des objets de l'invention est donc un procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate et un électrolyte, la concentration en silicate (exprimée en SiO2) dans ledit pied de cuve initial étant inférieure à 100 g/l et la concentration en électrolyte dans ledit pied de cuve initial étant inférieur à 17 g/l,
(ii) on ajoute l'agent acidifiant audit pied de cuve jusqu'à l'obtention d'une valeur de pH du milieu réactionnel d'au moins environ 7,
(iii) on ajoute au milieu réactionnel simultanément de l'agent acidifiant et un silicate,
   et dans lequel on sèche une suspension présentant un taux de matière sèche d'au plus 24% en poids,
   caractérisé en ce que ledit procédé comprend l'opération suivante :
(iv) on ajoute, après l'étape (iii), au milieu réactionnel au moins un composé A de l'aluminium, puis (v) on ajoute au milieu réactionnel un agent acidifiant, ladite séparation comportant une filtration et un délitage du gâteau issu de cette filtration, ledit délitage étant de préférence effectué en présence d'au moins un composé B de l'aluminium, et en ce qu'au cours des étapes (iv) et (v) et entre ces deux étapes aucun agent basique et silicate n'est ajouté.

Il a été ainsi trouvé que la simple introduction d'aluminium selon l'étape (iv) suivie de l'étape (v), décrites ci-dessus, combinée à une concentration faible en silicate (exprimée en SiO₂) et en électrolyte dans le pied de cuve initial et à un taux approprié de matière sèche de la suspension à sécher constituait une condition importante et suffisante pour conférer aux produits obtenus leurs excellentes propriétés, notamment des propriétés renfonçantes très satisfaisantes.

Il est à noter, d'une manière générale, que le procédé concerné est un procédé de synthèse de silice de précipitation, c'est-à-dire que l'on fait agir, dans des conditions très particulières, un agent acidifiant sur un silicate.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant utilisé dans le cadre de ce procédé peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 est 330 g/l, par exemple entre 60 et 300 g/l, en particulier entre 60 et 250 g/l.

De manière générale, on emploie, comme agent acidifiant, l'acide sulfurique, et comme silicate, le silicate de sodium.

Dans le cas où l'on utilise le silicate de sodium, celui-ci présente, en général, un rapport pondéral SiO₂/Na₂O compris entre 2 et 4, par exemple entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate (étape (i)). La quantité de silicate présente dans le pied de cuve initial ne représente avantageusement qu'une partie de la quantité totale de silicate engagée dans la réaction.

Selon une caractéristique du procédé de préparation selon l'invention, la concentration en silicate dans le pied de cuve initial est (supérieure à 0 g/l et) inférieure à 100 g de SiO₂ par litre. De préférence, cette concentration est inférieure à 90g/l, notamment à 85 g/l. Elle peut dans certains cas être inférieure à 80 g/l.

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le sulfate de sodium dans le cas de la réaction d'un silicate de sodium avec l'acide sulfurique.

Selon une caractéristique du procédé selon l'invention, la concentration en électrolyte dans le pied de cuve initial est (supérieur à 0 g/l et) inférieure à 17 g/l, de préférence inférieure à 14 g/l.

La deuxième étape consiste à ajouter l'agent acidifiant dans le pied de cuve de composition décrite plus haut (étape (ii)).

Cette addition qui entraîne une baisse corrélative du pH du milieu réactionnel se fait jusqu'à ce qu'on atteigne une valeur du pH d'au moins 7, généralement comprise entre 7 et 8.

Une fois qu'est atteinte la valeur souhaitée de pH, on procède alors à une addition simultanée (étape (iii)) d'agent acidifiant et de silicate.

Cette addition simultanée est de préférence réalisée de manière telle que la valeur du pH soit constamment égale (à ± 0,1 près) à celle atteinte à l'issue de l'étape (ii).

Selon un mode de réalisation préféré du procédé selon l'invention, après l'addition simultanée de l'étape (iii), l'addition de silicate est arrêtée, mais l'ajout d'agent acidifiant se poursuit lors de l'étape (iv) de manière telle que la valeur du pH soit constamment égale (à ± 0,1 près) à celle atteinte à l'issue de l'étape (ii).

L'ajout au milieu réactionnel d'un agent acidifiant selon l'étape (v) se fait de préférence de telle sorte que l'on obtienne une valeur du pH du milieu réactionnel comprise entre 3 et 6,5, en particulier entre 4 et 6.

Il peut être aussi avantageux d'effectuer l'addition simultanée de l'étape (iii), selon une durée qui peut varier de 5 à 60 minutes, en particulier de 20 à 40 minutes.

L'agent acidifiant utilisé lors de l'étape (v) est généralement identique à celui employé lors des étapes (ii) et (iii).

Un mûrissement du milieu réactionnel est avantageusement effectué après l'étape (v), par exemple pendant 2 à 60 minutes, en particulier pendant 5 à 30 minutes.

Le composé A de l'aluminium employé dans le procédé de préparation selon l'invention est préférentiellement un aluminate de métal alcalin, notamment de potassium ou, de manière très préférée de sodium.

La température du milieu réactionnel est généralement comprise entre 60 et 98°C.

Selon une variante de l'invention, la réaction est effectuée à une température constante comprise entre 70 et 96°C.

Selon une autre variante de l'invention, la température de fin de réaction est plus élevée que la température de début de réaction : ainsi, on maintient la température au début de la réaction (notamment lors de l'étape (ii)) de préférence entre 75 et 90°C, en particulier entre 80 et 85°C, puis on augmente la température en quelques minutes, de préférence jusqu'à une valeur comprise entre 85 et 98 °C, en particulier entre 90 et 95°C, valeur à laquelle elle est maintenue notamment lors de l'étape (iii) et jusqu'à la fin de la réaction ; les opérations (iv) et (v) sont ainsi habituellement effectuées à cette valeur comprise entre 85 et 98 °C et constante de température.

On obtient, à l'issue des étapes qui viennent d'être décrites, une bouillie de silice qui est ensuite séparée (séparation liquide-solide).

Cette séparation comporte une filtration, suivie d'un lavage si nécessaire, et un délitage, ledit délitage étant effectué de préférence en présence d'au moins un composé B de l'aluminium.

L'opération de délitage, qui peut être réalisée par exemple par passage du gâteau de filtration dans un broyeur de type colloïdal ou à bille, permet notamment d'abaisser la viscosité de la suspension à sécher ultérieurement.

Le composé B de l'aluminium est préférentiellement un aluminate de métal alcalin, notamment de potassium ou, de manière très préférée de sodium. Il est habituellement identique au composé A de l'aluminium mentionné précédemment

Avantageusement, ledit délitage est effectué en présence d'au moins un agent acidifiant tel que décrit précédemment.

Lorsque le composé B de l'aluminium est présent dans l'étape de délitage, cet agent acidifiant peut être ajouté postérieurement ou de préférence simultanément au composé B de l'aluminium.

De préférence, les quantités de composés A et éventuellement B de l'aluminium utilisées dans le procédé de préparation selon l'invention sont telles que la silice précipitée ainsi préparée contient au moins 0,35 %, en particulier au moins 0,45 %, par exemple entre 0,50 et 1,50 %, voire entre 0,75 et 1,40 % en poids d'aluminium.

La séparation mise en oeuvre dans le procédé de préparation selon l'invention comprend habituellement une filtration effectuée au moyen de toute méthode convenable, par exemple au moyen d'un filtre à bande, d'un filtre rotatif sous vide ou, de préférence, d'un filtre presse.

La suspension de silice précipitée ainsi récupérée (gâteau de filtration) est ensuite séchée.

Selon une caractéristique du procédé de préparation selon l'invention, cette suspension doit présenter immédiatement avant son séchage un taux de matière sèche d'au plus 24% en poids, de préférence d'au plus 22% en poids.

Ce séchage peut se faire selon tout moyen connu en soi.

De préférence, le séchage se fait par atomisation.

A cet effet, on peut utiliser tout type d'atomiseur convenable, notamment un atomiseur à turbines, à buses, à pression liquide ou à deux fluides.

Selon un mode de réalisation de l'invention, la suspension à sécher présente un taux de matière sèche supérieur à 15 % en poids, de préférence supérieur à 17 % en poids et, par exemple à 20 % en poids. Le séchage est alors de préférence effectué au moyen d'un atomiseur à buses.

La silice précipitée susceptible d'être obtenue selon ce mode de réalisation de l'invention et de préférence en mettant an oeuvre un filtre presse se présente avantageusement sous forme de billes sensiblement sphériques, de préférence d'une taille moyenne d'au moins 80 µm.

Il est à noter que l'on peut également, après la filtration, à une étape ultérieure du procédé, rajouter au gâteau de filtration de la matière sèche, par exemple de la silice sous forme pulvérulente.

A l'issue du séchage, on peut procéder à une étape de broyage sur le produit récupéré, notamment sur le produit obtenu par séchage de suspension présentant un taux de matière sèche supérieur à 15 % en poids. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon un autre mode de réalisation de l'invention, la suspension à sécher présente un taux de matière sèche d'au plus 15 % en poids. Le séchage est alors en général effectué au moyen d'un atomiseur à turbines. La silice précipitée qui est alors susceptible d'être obtenue seslon ce mode de réalisation de l'invention et de préférence en mettant en oeuvre un filtre rotatif sous vide se présente généralement sous la forme d'une poudre, de préférence de taille moyenne d'au moins 15 µm, en particulier comprise entre 30 et 150 µm, par exemple entre 45 et 120 µm.

Enfin, le produit séché (notamment à partir d'une suspension ayant un taux de matière sèche d'au plus 15 % en poids) ou broyé peut, selon un autre mode de réalisation de l'invention, être soumis à une étape d'agglomération.

On entend ici par agglomération tout procédé qui permet de lier entre eux des objets finement divisés pour les amener sous la forme d'objets de plus grande taille et résistant mieux mécaniquement.

Ces procédés sont notamment la compression directe, la granulation voie humide (c'est-à-dire avec utilisation d'un liant tel que eau, slurry de silice, ...), l'extrusion et, de préférence, le compactage à sec.

Lorsque l'on met en oeuvre cette dernière technique, il peut s'avérer avantageux, avant de procéder au compactage, de désaérer (opération aussi appelée pré-densification ou dégazage) les produits pulvérulents de manière à éliminer l'air inclus dans ceux-ci et assurer un compactage plus régulier.

La silice précipitée susceptible d'être obtenue selon ce mode de réalisation de l'invention se présente avantageusement sous la forme de granulés, de préférence de taille d'au moins 1 mm, en particulier comprise entre 1 et 10 mm.

A l'issue de l'étape d'agglomération, les produits peuvent être calibrés à une taille désirée, par exemple par tamisage, puis conditionnés pour leur utilisation future.

Les poudres, de même que les billes, de silice précipitée obtenues par le procédé selon l'invention offrent ainsi l'avantage, entre autre, d'accéder de manière simple, efficace et économique à des granulés tels que précités, notamment par des opérations classiques de mise en forme, telles que par exemple une granulation ou un compactage sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Les silices précipitées obtenues selon le procédé de la présente invention présentent une très bonne aptitude à la dispersion (et à la désagglomération) et des propriétés renforçantes très satisfaisantes, en particulier qui, utilisées à titre de charge renforçante pour élastomères, confèrent à ces derniers de bonnes propriétés rhéologiques tout en leur procurant des propriétés mécaniques très satisfaisantes.

Ainsi, les silices précipitées obtenues selon le procédé de la présente invention possèdent généralement les caractéristiques suivantes :
- une surface spécifique BET comprise entre 120 et 300 m²/g, de préférence entre 130 et 270 m²/g, en particulier entre 140 et 200 m²/g,
- une prise d'huile DOP inférieure à 300 ml/100 g, de préférence comprise entre 200 et 295 ml/100 g,
- un diamètre médian (Ø₅₀), après désagglomération aux ultra-sons, inférieur à 3 µm,
- un facteur de désagglomération aux ultra-sons (F_{D}) supérieur à 5,5 ml, en particulier supérieur à 11 ml, par exemple supérieur à 12,5 ml.
- une distribution poreuse telle que le volume poreux constitué par les pores dont le diamètre est compris entre 175 et 275 Å représente moins de 50 % du volume poreux constitué par les pores de diamètres inférieurs ou égaux à 400 Å,
- une teneur en aluminium d'au moins 0,35 % en poids, de préférence d'au moins 0,45 % en poids.

Elles présentent, de manière préférée, une teneur en aluminium comprise entre 0,50 et 1,50 % en poids ; cette teneur peut être notamment comprise entre 0,75 et 1,40 % en poids.

Une des caractéristiques de la silice obtenue selon l'invention réside habituellement dans la distribution, ou répartition, du volume poreux, et notamment dans la distribution du volume poreux qui est généré par les pores de diamètres inférieurs ou égaux à 400 Å. Ce dernier volume correspond au volume poreux utile des charges qui sont employées dans le renforcement des élastomères. L'analyse des programmes montre qu'alors cette silice possède de préférence une distribution poreuse telle que le volume poreux constitué par les pores dont le diamètre est compris entre 175 et 275 Å représente moins de 50 %, par exemple moins de 40 %, du volume poreux constitué par les pores de diamètres inférieurs ou égaux à 400 Å.

Les silices précipitées ainsi obtenues présentent généralement une surface spécifique CTAB comprise entre 100 et 240 m²/g, de préférence entre 130 et 225 m²/g, par exemple entre 140 et 200 m²/g.

Selon une variante de l'invention, la silice obtenue possède un rapport surface spécifique BET / surface spécifique CTAB compris entre 1,0 et 1,2, c'est-à-dire qu'elle présente de préférence une faible microporosité.

Son pH est, en général, compris entre 6 et 7,5, par exemple entre 6,1 et 7,3.

Les silices préparées selon le procédé de l'invention peuvent se présenter sous forme de poudre, de billes sensiblement sphériques ou éventuellement, de granulés et sont notamment caractérisées par le fait que, tout en ayant une taille relativement élevée, elles présentent une très bonne aptitude à la dispersion et à la désagglomération et des propriétés renforçantes très satisfaisantes. Elles peuvent présenter ainsi une aptitude à la dispersion et à la désagglomération avantageusement supérieure, à surface spécifique identique ou proche et à taille identique ou proche, à celle des silices de l'art antérieur.

Les poudres de silice présentent préférentiellement une taille moyenne d'au moins 15 µm : celle-ci est par exemple comprise entre 15 et 60 µm (notamment entre 20 et 45 µm) ou entre 30 et 150 µm (notamment entre 45 et 120 µm).

La densité de remplissage à l'état tassé (DRT) desdites poudres et, en général, d'au moins 0,17, et, par exemple, comprise entre 0,2 et 0,3.

Lesdites poudres présentent généralement un volume poreux total d'au moins 2,5 cm³/g, et, plus particulièrement, compris entre 3 et 5 cm³/g.

Elles permettent notamment d'obtenir un très bon compromis mise en oeuvre/propriétés mécaniques à l'état vulcanisé.

Elles constituent aussi des précurseurs privilégiés pour la synthèse de granulés tels que décrits plus loin.

Les billes sensiblement sphériques susceptibles d'être obtenues selon l'invention présentent préférentiellement une taille moyenne d'au moins 80 µm.

Cette taille moyenne des billes peut être d'au moins 100 µm, par exemple d'au moins 150 µm : elle est généralement d'au plus 300 µm et se situe de préférence entre 100 et 270 µm. Cette taille moyenne est déterminée selon la norme NF X 11507 (décembre 1970) par tamisage à sec et détermination du diamètre correspondant à un refus cumulé à 50 %.

Elles possèdent, de manière préférée, une prise d'huile DOP comprise entre 240 et 290 ml/100g.

La densité de remplissage à l'état tassé (DRT) desdites billes (ou perles) est, en général, d'au moins 0,17 et, par exemple, comprise entre 0,2 et 0,34.

Elles présentent habituellement un volume poreux total d'au moins 2,5 cm³/g, et plus particulièrement, compris entre 3 et 5 cm³/g.

Comme indiqué ci-avant, une telle silice sous forme de billes sensiblement sphériques, avantageusement pleines, homogènes, peu poussiérantes et dé bonne coulabilité, présente une excellente aptitude à la désagglomération et à la dispersion. En outre, elle présente de bonnes propriétés renforçantes. Une telle silice constitue également un précurseur privilégié pour la synthèse des poudres et des granulés.

Une telle silice sous forme de billes sensiblement sphériques constitue une variante très avantageuse des silices préparées selon le procédé de la présente invention.

Les dimensions des granulés susceptibles d'être obtenus selon l'invention sont préférentiellement d'au moins 1 mm, en particulier comprises entre 1 et 10 mm, selon l'axe de leur plus grande dimension (longueur).

Ils possèdent, de manière préférée, une prise d'huile DOP comprise entre 200 et 260 ml/100 g.

Lesdits granulés peuvent se présenter sous des formes les plus diverses. A titre d'exemple, on peut notamment citer les formes sphérique, cylindrique, parallélépipédique, de pastille, de plaquette, de boulette, d'extrudé à section circulaire ou polylobée.

La densité de remplissage à l'état tassé (DRT) desdits granulés est en général d'au moins 0,27 et peut aller jusqu'à 0,37.

Ils présentent généralement un volume poreux total d'au moins 1 cm³/g, et, plus particulièrement, entre 1,5 et 2 cm³/g.

Les silices préparées par le procédé selon l'invention trouvent une application particulièrement intéressante dans le renforcement des élastomères, naturels ou synthétiques. Elles confèrent à ces élastomères d'excellentes propriétés rhéologiques tout en leur procurant de bonnes propriétés mécaniques et, en général, une bonne résistance à l'abrasion. De plus, ces élastomères sont alors de préférence sujets à un échauffement réduit.

Les exemples suivants illustrent sans toutefois en limiter la portée.

### Exemple 1 :

Dans un réacteur équipé d'un système de régulation de température et de pH et d'un système d'agitation par hélice, on introduit 4830 g d'eau, 2839 g d'une solution de sulfate de sodium concentrée à 46,8 g/l et 4370 g de silicate de soude de Rp= 3,47 à 236g/l en SiO₂ (Rp signifie rapport pondéral de SiO2 sur Na2O).

Après la mise en marche de l'agitation (250 tr/mn) le pied de cuve ainsi constitué est chauffé à 84°C et le pH est amené à 8 en 50 minutes par ajout d'une solution aqueuse d'acide sulfurique à 80 g/l (débit moyen de 91 g/minute). Lors de cette phase de neutralisation progressive, au bout de 35 minutes, on chauffe le pied de cuve avec une rampe de montée en température de 1°C/min. Lorsque la température de 92°C est atteinte, on procède à l'addition simultanée de 1080 g de silicate de soude (236g/l) et 1320 g d'acide sulfurique dilué (80g/l). Cette dernière quantité d'acide est ajustée de manière à maintenir le pH du milieu à une valeur constante de 8. Après 30 minutes d'addition, on arrête l'addition de silicate, on effectue l'addition de 64 grammes d'aluminate de soude (24 %) en 5 minutes. Ensuite, on continue l'addition d'acide jusqu'à stabiliser le pH du mélange réactionnel à 5,2. La bouillie réactionnelle est filtrée, le gâteau obtenu est délité avec 0,3 % d'aluminium sous forme d'aluminate de sodium (24 % d'extrait sec Al₂O₃ ; le taux de matière sèche de la bouillie résultante est de 16 %) et séché par atomisation.

### Exemple 2 :

Dans un réacteur équipé d'un système de régulation de température et de pH et d'un système d'agitation par hélice, on introduit 4830 g d'eau, 2839 g d'une solution de sulfate de sodium concentrée à 46,8 g/l et 4370 g de silicate de soude de Rp= 3,47 à 236 g/l en SiO₂.

Après la mise en marche de l'agitation (250 tr/mn) le pied de cuve ainsi constitué est chauffé à 84°C et le pH est amené à 8 en 50 minutes par ajout d'une solution aqueuse d'acide sulfurique à 80 g/l (débit moyen de 91 g/minute). Lors de cette phase de neutralisaion progressive, au bout de 35 minutes, on chauffe le pied de cuve avec une rampe de montée en température de 1°C /Min. Lorsque la température de 92°C est atteinte, on procède à l'addition simultanée de 1080 g de silicate de soude (236 g/l) et 1320 g d'acide sulfurique dilué (80 g/l). Cette dernière quantité d'acide est ajustée de manière à maintenir le pH du milieu à une valeur constante de 8. Après 30 minutes d'addition, on arrête l'addition de silicate, on effectue l'addition de 64 grammes d'aluminate de soude (24 %) en 5 minutes. Ensuite, on continue l'addition d'acide jusqu'à stabiliser le pH du mélange réactionnel -à- 5,2. La bouillie réactionnelle est filtrée, le gâteau obtenu est délité sans ajout d'aluminate (le taux de matière sèche de la bouillie résultante est de 16 %) et atomisé.

### Exemple 3 :

Dans un réacteur équipé d'un système de régulation de température et de pH et d'un système d'agitation par hélice, on introduit 4830 g d'eau, 2839 g d'une solution de sulfate de sodium concentrée à 46,8 g/l et 4370 g de silicate de soude de Rp 3,47 à 236 g/l en SiO₂.

Après la mise en marche de l'agitation (250 tr/min) le pied de cuve ainsi constitué est chauffé à 84°C et le pH est amené à 8 en 50 minutes par ajout d'une solution aqueuse d'acide sulfurique à 80 g/l (débit moyen de 91 g/mn). Lors de cette phase de neutralisation progressive, au bout de 35 minutes, on chauffe le pied de cuve avec une rampe de montée en température de 1°C/min. Lorsque la température de 92°C est atteinte, on procède à l'addition simultanée de 1080 g de silicate de soude (236 g/l) et 1320 g d'acide sulfurique dilué (80 g/l). Cette dernière quantité d'acide est ajustée de manière à maintenir le pH du milieu à une valeur constante de 8. Après 30 minutes d'addition, on arrête l'addition de silicate, on effectue l'addition de 32 grammes d'aluminate de soude (24 %) en 5 minutes. Ensuite, on continue l'addition d'acide jusqu'à statiliser le pH du mélange réactionnel à 5,2. La bouillie réactionnelle est filtrée, le gâteau obtenu est délité avec 0,3 % d'aluminium (le taux de matière sèche de la bouillie résultante est de 16 %) et atomisé.

Les propriétés physico-chimiques des silices obtenues selon les exemples 1 à 3 sont données dans le tableau 1 ci-dessous.

**Tableau 1**

| N° Ex. | pH | SO4 | Hum. | PAF | BET | CTAB | F_{D} | Ø₅₀ | R Si |
|---|---|---|---|---|---|---|---|---|---|
| Ex. 1 | 6,2 | 1,5 | 6,4 | 10,7 | 152 | 150 | 12,6 | 1,6 | 0,67 |
| Ex. 2 | 6,8 | 1,7 | 8,4 | 11,9 | 154 | 153 | 13,2 | 1,8 | 0,53 |
| Ex. 3 | 6,5 | 1,4 | 6,8 | 11,5 | 162 | 162 | 16 | 1,7 | 0,55 |

SO4 représente le pourcentage massique de sel Na₂SO₄ présent dans le solide, Hum. représente le pourcentage massique d'eau présent dans le solide désorbant à 105°C pendant deux heures, PAF représente le pourcentage de masse perdue au cours d'une calcination à 1000°C pendant 2 heures.

La réactivité silane (R Si) est mesurée selon le mode opératoire suivant :

Dans un ballon de 250 ml on introduit 10.62 g de Si69 (le bis[3-triethyoxysilylpropyl)tetrasulfane]), 12,040 g de silice et 60.2 g de Xylène. On place le ballon muni d'un réfrigérant dans un bain d'huile à 120°C sous agitation magnétique. La réaction de greffage dure 2 heures. Ensuite le silane Si69 non greffé est dosé par infra-rouge en suivant le pic à 960 cm⁻¹, une courbe d'étalonnage ayant au préalable été effectuée.

Ainsi, R Si est représentatif de la réactivité de la silice produite vis-à-vis d'un agent de couplage.

Les silices préparées selon le procédé de la présente invention possèdent un bon compromis productivité-réactivité.

## Revendications

1. Procédé de préparation de silice précipitée du type comprenant la réaction d'un silicate avec un agent acidifiant ce par quoi l'on obtient une suspension de silice précipitée, puis la séparation et le séchage de cette suspension, dans lequel on réalise la précipitation de la manière suivante :
(i) on forme un pied de cuve initial comportant un silicate et un électrolyte, la concentration en silicate (exprimée en SiO2) dans ledit pied de cuve initial étant inférieure à 100 g/l et la concentration en électrolyte dans ledit pied de cuve initial étant inférieur à 17 g/l,
(ii) on ajoute l'agent acidifiant audit pied de cuve jusqu'à l'obtention d'une valeur de pH du milieu réactionnel d'au moins environ 7,
(iii) on ajoute au milieu réactionnel simultanément de l'agent acidifiant et un silicate,
et dans lequel on sèche une suspension présentant un taux de matière sèche d'au plus 24% en poids,
**caractérisé en ce que** ledit procédé comprend l'opération suivante :
(iv) on ajoute, après l'étape (iii), au milieu réactionnel au moins un composé A de l'aluminium, puis (v) on ajoute au milieu réactionnel un agent acidifiant, ladite séparation comportant une filtration et un délitage du gâteau issu de cette filtration, ledit délitage étant de préférence effectué en présence d'au moins un composé B de l'aluminium, et **en ce qu'**au cours des étapes (iv) et (v) et entre ces deux étapes aucun agent basique et silicate n'est ajouté.

2. Procédé selon la revendication 1, **caractérisé en ce qu'**après l'addition simultanée de l'étape (iii), l'addition de silicate est arrêtée, mais l'ajout d'agent acidifiant se poursuit lors de l'étape (iv) de manière telle que la valeur du pH soit constamment égale (à ± 0,1 près) à celle atteinte à l'issue de l'étape (il).

3. Procédé selon la revendication 1 ou 2, caractérisé eh ce que l'ajout au milieu réactionnel d'un agent acidifiant selon l'étape (v) se fait de telle sorte que l'on obtienne une valeur du pH du milieu réactionnel comprise entre 3 et 6,5, en particulier entre 4 et 6.

4. Procédé selon l'une quelconque des revendications 1 à 3, **caractérisé en ce que** le silicate est un silicate de métal alcalin

5. Procédé selon l'une quelconque des revendications 1 à 4, **caractérisé en ce que** l'agent acidifiant utilisé est choisi parmi l'acide sulfurique, l'acide nitrique ou l'acide chlorhydrique, l'acide acétique, l'acide formique et l'acide carbonique.

6. Procédé selon l'une quelconque des revendications 1 à 5, **caractérisé en ce que** l'agent acidifiant utilisé lors de l'étape (v) est identique à celui employé lors des étapes (ii) et (iii).

7. Procédé selon l'une quelconque des revendications 1 à 6, **caractérisé en ce que** l'addition simultanée selon l'étape (iii) est réalisée de manière telle que la valeur du pH soit constamment égale (à ± 0,1 près) à celle atteinte à l'issue de l'étape (ii).

8. Procédé selon l'une quelconque des revendications 1 à 7, **caractérisé en ce que** le composé A et éventuellement le composé B de l'aluminium est un aluminate de métal alcalin, notamment de potassium ou, de manière très préférée de sodium.

9. Procédé selon l'une quelconque des revendications 1 à 8, **caractérisé en ce que** les quantités de composés A et éventuellement B de l'aluminium sont telles que la silice précipitée préparée contient au moins 0,35 %, en particulier au moins 0,45 %, par exemple entre 0,50 et 1,50 %, voire entre 0,75 et 1,40 % en poids d'aluminium.

10. Utilisation comme charge renforçante pour élastomères d'une silice obtenue par le procédé selon l'une quelconque des revendications 1 à 9.

## Patentansprüche

1. Verfahren zur Herstellung von Fällungskieselsäure des Typs, der die Reaktion eines Silikats mit einem Ansäuerungsmittel, wodurch man eine Suspension von Fällungskieselsäure erhält, und die nachfolgende Trennung und Trocknung dieser Suspension umfasst, bei dem man die Fällung folgendermaßen durchgeführt:
(i) man bildet eine anfängliche Vorlage, die ein Silikat und einen Elektrolyt enthält, wobei die Silikatkonzentration (ausgedrückt als SiO₂) in der anfänglichen Vorlage weniger als 100 g/l beträgt und die Elektrolytkonzentration in der anfänglichen Vorlage weniger als 17 g/l beträgt,
(ii) man gibt das Ansäuerungsmittel zu der Vorlage, bis sich ein pH-Wert des Reaktionsmediums von mindestens ungefähr 7 ergibt,
(iii) man gibt das Ansäuerungsmittel und ein Silikat gleichzeitig zu dem Reaktionsmedium,
und bei dem man eine Suspension mit einem Feststoffgehalt von höchstens 24 Gew.-% trocknet,
**dadurch gekennzeichnet, dass** das Verfahren den folgenden Arbeitsgang umfasst:
(iv) man gibt nach Schritt (iii) mindestens eine Aluminiumverbindung A zu dem Reaktionsmedium und gibt dann (v) ein Ansäuerungsmittel zu dem Reaktionsmedium, wobei die Trennung eine Filtration und eine Fragmentierung des aus dieser Filtration stammenden Kuchens umfasst, wobei die Fragmentierung vorzugsweise in Gegenwart mindestens einer Aluminiumverbindung B durchgeführt wird und im Verlauf der Schritte (iv) und (v) und zwischen diesen beiden Schritten kein basisches Mittel und Silikat zugegeben wird.

2. Verfahren nach Anspruch 1, **dadurch gekennzeichnet, dass** nach der gleichzeitigen Zugabe von Schritt (iii) die Zugabe von Silikat gestoppt wird, aber die Zugabe von Ansäuerungsmittel während Schritt (iv) fortgesetzt wird, so dass der pH-Wert konstant gleich (auf ± 0,1 genau) dem am Ende von Schritt (ii) erreichten pH-Wert ist.

3. Verfahren nach Anspruch 1 oder 2, **dadurch gekennzeichnet, dass** die Zugabe eines Ansäuerungsmittels zu dem Reaktionsmedium gemäß Schritt (v) so erfolgt, dass man einen pH-Wert des Reaktionsmediums zwischen 3 und 6,5 und insbesondere zwischen 4 und 6 erhält.

4. Verfahren nach einem der Ansprüche 1 bis 3, **dadurch gekennzeichnet, dass** es sich bei dem Silikat um ein Alkalimetallsilikat handelt.

5. Verfahren nach einem der Ansprüche 1 bis 4, **dadurch gekennzeichnet, dass** das Ansäuerungsmittel aus Schwefelsäure, Salpetersäure oder Salzsäure, Essigsäure, Ameisensäure und Kohlensäure ausgewählt wird.

6. Verfahren nach einem der Ansprüche 1 bis 5, **dadurch gekennzeichnet, dass** das während Schritt (v) verwendete Ansäuerungsmittel mit dem während der Schritte (ii) und (iii) eingesetzten Ansäuerungsmittel identisch ist.

7. Verfahren nach einem der Ansprüche 1 bis 6, **dadurch gekennzeichnet, dass** die gleichzeitige Zugabe gemäß Schritt (iii) so durchgeführt wird, dass der pH-Wert konstant gleich (auf ± 0,1 genau) dem am Ende von Schritt (ii) erreichten pH-Wert ist.

8. Verfahren nach einem der Ansprüche 1 bis 7, **dadurch gekennzeichnet, dass** es sich bei der Aluminiumverbindung A und gegebenenfalls der Aluminiumverbindung B um ein Alkalimetallaluminat, insbesondere Kaliumaluminat oder ganz besonders bevorzugt Natriumaluminat, handelt.

9. Verfahren nach einem der Ansprüche 1 bis 8, **dadurch gekennzeichnet, dass** die Mengen der Aluminiumverbindung A und gegebenenfalls der Aluminiumverbindung B so beschaffen sind, dass die hergestellte Fällungskieselsäure mindestens 0,35 Gew.-%, insbesondere mindestens 0,45 Gew.-%, beispielsweise zwischen 0,50 und 1,50 Gew.-% oder sogar zwischen 0,75 und 1,40 Gew.-%, Aluminium enthält.

10. Verwendung einer durch das Verfahren nach einem der Ansprüche 1 bis 9 erhaltenen Kieselsäure als verstärkender Füllstoff für Elastomere.

## Claims

1. Process for the preparation of precipitated silica of the type including the reaction of a silicate with an acidifying agent, whereby a suspension of precipitated silica is obtained, followed by the separation and the drying of this suspension, in which the precipitation is carried out in the following manner:
(i) an initial base stock comprising a silicate and an electrolyte is formed, the silicate concentration (expressed as SiO₂) in said initial base stock being lower than 100 g/l and the electrolyte concentration in said initial base stock being lower than 17 g/l,
(ii) the acidifying agent is added to said base stock until a pH value of the reaction mixture of at least approximately 7 is obtained,
(iii)the acidifying agent and a silicate are added simultaneously to the reaction mixture,
and in which a suspension which has a solids content of not more than 24% by weight is dried,
**characterized in that** said process includes the following operation:
(iv) at least one aluminum compound A is added to the reaction mixture after stage (iii), and then (v) an acidifying agent is added to the reaction mixture, said separation comprising a filtration and a disintegration of the cake originating from this filtration, said disintegration being preferably performed in the presence of at least one aluminum compound B, and **in that** during stages (iv) and (v) and between these two stages, no basic agent and silicate is added.

2. Process according to Claim 1, **characterized in that** after the simultaneous addition of stage (iii), the addition of silicate is stopped, but the addition of an acidifying agent continues during stage (iv) such that the pH value is constantly equal (to within ± 0.1) to that reached at the end of stage (ii).

3. Process according to Claim 1 or 2, **characterized in that** an acidifying agent is added to the reaction mixture according to stage (v) such that a pH value of the reaction mixture of between 3 and 6.5, in particular 4 and 6, is obtained.

4. Process according to any one of Claims 1 to 3, **characterized in that** the silicate is an alkali metal silicate.

5. Process according to any one of Claims 1 to 4, **characterized in that** the acidifying agent used is chosen from sulfuric acid, nitric acid or hydrochloric acid, acetic acid, formic acid and carbonic acid.

6. Process according to any one of Claims 1 to 5, **characterized in that** the acidifying agent used during stage (v) is identical to that used during stages (ii) and (iii).

7. Process according to any one of Claims 1 to 6, **characterized in that** the simultaneous addition relating to stage (iii) is carried out so that the pH value is constantly equal (to within ± 0.1) to that reached at the end of stage (ii).

8. Process according to any one of Claims 1 to 7, **characterized in that** the aluminum compound A and optionally the aluminum compound B is an alkali metal, especially potassium, or very preferably sodium, aluminate.

9. Process according to any one of Claims 1 to 8, **characterized in that** the quantities of the aluminum compounds A and if appropriate B are such that the precipitated silica prepared contains at least 0.35%, in particular at least 0.45%, for example between 0.50 and 1.50%, or even between 0.75 and 1.40%, by weight of aluminum.

10. Use, as reinforcing filler for elastomers, of a silica obtained by the process according to any one of Claims 1 to 9.
